# EUROPEAN PATENT SPECIFICATION

(11) **EP 1 736 447 B1**
(45) Date of publication and mention of the grant of the patent: **20.02.2019**
(21) Application number: 05720194.9
(22) Date of filing: 07.03.2005
(51) Int. Cl.: C03B 37/014, C03B 8/04

(54) **METHOD FOR SINTERING POROUS GLASS BASE MATERIAL**
VERFAHREN ZUM SINTERN VON PORÖSEM GLASBASISMATERIAL
PROCEDE DE FRITTAGE DE MATERIAU DE BASE DE VERRE POREUX

(30) Priority: 18.03.2004 JP 2004078168
(43) Date of publication of application: 27.12.2006
(73) Proprietor: Shin-Etsu Chemical Co., Ltd., Tokyo 100-0004 (JP)
(72) Inventor: YOSHIDA, Makoto, c/o Shin-Etsu Chemical Co., Ltd., Kashima-gun, Ibaraki 3140116 (JP); KAMIO, Takeshi, c/o Shin-Etsu Chemical Co., Ltd., Kashima-gun, Ibaraki 3140116 (JP); KOIDE, Hiroyuki, c/o Shin-Etsu Chemical Co., Ltd., Kashima-gun, Ibaraki 3140116 (JP)
(74) Representative: Pfenning, Meinig & Partner mbB
(86) International application number: PCT/JP2005/003922
(87) International publication number: WO 2005/090249

(56) References cited:
- JP-A- 2000 128 563
- JP-A- 2000 219 532
- JP-A- 2000 256 020
- JP-A- 2000 256 020
- JP-A- 2000 264 649
- JP-A- 2000 264 649
- JP-A- 2002 104 830
- US-A1- 2002 056 292
- US-B1- 6 442 978
- US-B1- 6 543 257

## Description

### [TECHNICAL FIELD]

The present invention relates to sintering a porous glass base material, which is an original material of an optical fiber, for dehydration and vitrification into a transparent glass.

### [BACKGROUND ART]

A porous glass base material, which is an original material for an optical fiber, is formed by deposition of glass particles in accordance with the vapor-phase axial deposition (VAD) or outside vapor deposition (OVD) method. The formed porous glass base material is inserted into a furnace core tube in which a dehydration gas and an inert gas are supplied, and moved through a heated region so as to be sintered. Thus, the porous glass base material is dehydrated and vitrified into a transparent glass. In this way, a glass base material for an optical fiber including a core and a clad is manufactured. After this, the glass base material is elongated such that the diameter thereof is reduced to be suitable for drawing. Thus, an optical fiber preform is obtained. The preform is drawn into an optical fiber by a drawing device.

When the porous glass base material is sintered, a certain amount of thermal energy is applied to the porous glass base material for dehydration and vitrification into a transparent glass. The amount of this thermal energy is set by adjusting parameters such as the flow rates of the dehydration gas and inert gas, the transit rate at which the porous glass base material is moved through the heated region, and the temperature of the heating source for the heated region, so as to cause the entire porous glass base material to be fused and not to cause the glass base material to become longer.

Here, if the amount of the thermal energy applied is insufficient, the following problem may occur. When the vitrification of the porous glass base material by fusion begins, there is a large difference in temperature between the inner and outer portions of the rod-like porous glass base material. Therefore, the vitrification does not proceed concentrically in terms of the cross-section in the radial direction. Accordingly, vitrified and non-vitrified parts are mixed and arranged asymmetrically with respect to the central axis in the radial direction. Here, the non-vitrified parts later vitrify, and shrink with adjacent parts that have already been vitrified and thus have a lower viscosity. This causes uneven shrinkage. As a result, the core is displaced from the axial center in the glass base material for an optical fiber.

Even the slightest core displacement results in more uneven application of the thermal energy, which deforms the shape of the cross-section into an ellipse. Once the core is displaced and the shape of the cross-section is deformed into an ellipse, the application of the thermal energy from the surface to the inside becomes increasingly uneven in the radial direction, and uneven shrinkage thus successively occurs during the sintering process. Consequently, the core is displaced and the cross-sectional shape is deformed into an ellipse in the entire preform.

An optical fiber obtained by drawing such a preform has the problems of the core displacement and deformed cross-sectional shape. When such optical fibers are adhered or fusion-bonded to each other at the end surfaces thereof, a connection loss occurs due to difference in shape between the cores or clads at the connection, misalignment of the axial centers of the cores, and difference in diameter between the cores.

As a method to reduce core displacement and cross-sectional shape deformation of a glass base material for an optical fiber, Patent Document 1 proposes that the lowering rate at which a porous glass base material is lowered is set slower in the former half period of the sintering step than in the later half period. This method, however, can not assure that core displacement and cross-sectional shape deformation are reliably reduced in the glass base material entirely in the longitudinal direction. Each of the prior art documents US 6 442 978 B1, US 6 543 257 B1, and US 2002/0056292 A1 disclose a method comprising the combination of steps of the preamble of claim 1.

[Patent Document 1] Unexamined Japanese Patent Application Publication No. 2000-256020

### [DISCLOSURE OF THE INVENTION]

### [PROBLEMS TO BE SOLVED BY THE INVENTION]

An advantage of some aspects of the present invention is to provide a sintering method and a sintering apparatus of a porous glass base material for sintering a porous glass base material to be dehydrated and vitrified into a transparent glass without causing core displacement and cross-sectional shape deformation in the base material.

### [MEANS FOR SOLVING THE PROBLEMS]

The present invention is defined by claim 1. An example is a sintering method of a porous glass base material for sintering a rod-like porous glass base material by hanging and moving the rod-like porous glass base material through a heating furnace. Here, the porous glass base material is lowered into a heating furnace heated to a sintering temperature, and after every part of the porous glass base material is moved through a preheated region extending from an upper edge of an insulating member to an upper edge of a heater in a heating furnace body, in 4.5 hours or longer, the porous glass base material is sintered by the heater to be vitrified into a transparent glass.

Another example is a sintering apparatus of a porous glass base material for sintering a rod-like porous glass base material by hanging and moving the rod-like porous glass base material through a heating furnace. Here, a length of an insulating member is set such that every part of a porous glass base material is lowered into a heating furnace, and moved through a preheated region extending from an upper edge of the insulating member to an upper edge of a heater in a heating furnace body, in 4.5 hours or longer.

### [EFFECT OF THE INVENTION]

A sintering method of a porous glass base material relating to an aspect of the present invention realizes a high-quality optical fiber preform with core displacement and cross-sectional shape deformation reduced. In addition, by drawing this preform, a high-quality optical fiber achieving a low connection loss can be manufactured.

### [BRIEF DESCRIPTION OF THE DRAWINGS]

Fig. 1 is a vertical cross-sectional view schematically illustrating an example of a sintering apparatus of a porous glass base material.

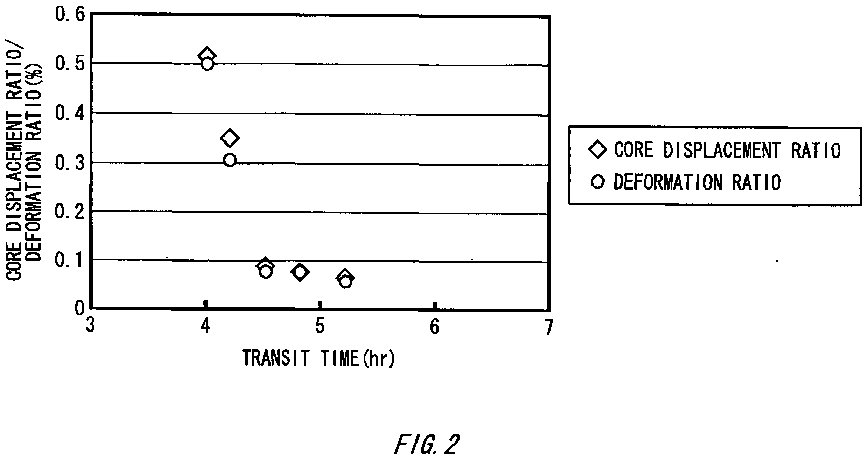

Fig. 2 is a graph showing a relation between the transit time within which a porous glass base material is moved through a preheated region and a core displacement ratio/a deformation ratio, obtained as a result of an example 1.

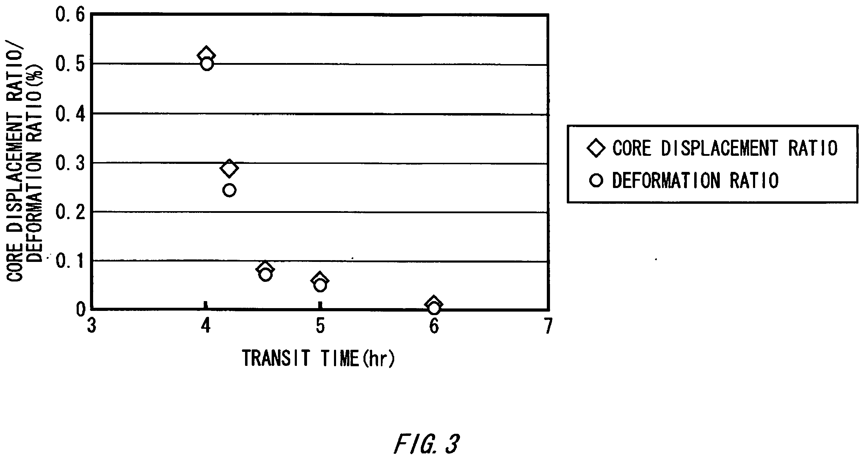

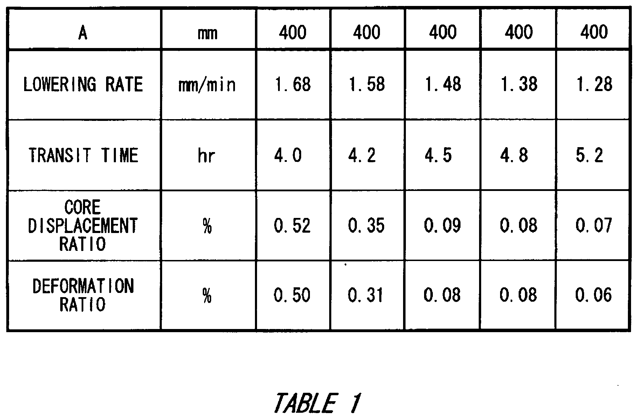

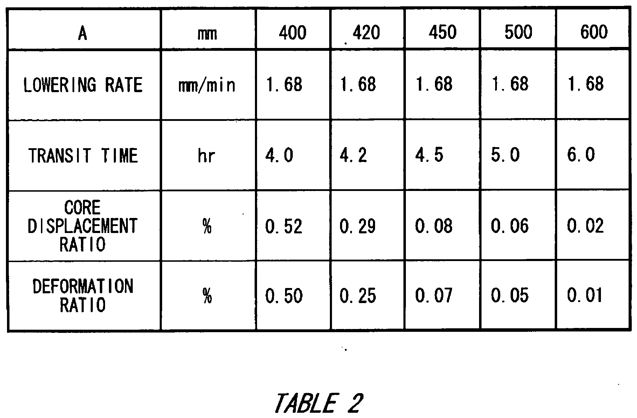

Fig. 3 is a graph showing a relation between the transit time within which a porous glass base material is moved through a preheated region and a core displacement ratio/a deformation ratio, obtained as a result of an example 2.

### [BEST MODE FOR CARRYING OUT THE INVENTION]

Hereinafter, the present invention will now be described through a preferred embodiment. The embodiment does not limit the invention according to claims, and all the combinations of the features described in the embodiment are not necessarily essential to means for solving the problems of the invention.

An aspect of the invention aims to solve the above-described problem associated with a process of moving a rod-like porous glass base material through a heating furnace heated to a sintering temperature so that the porous glass base material is sintered and vitrified into a transparent glass. To be specific, according to the aspect of the invention, every part of the porous glass base material is moved through a preheated region extending from the upper edge of an insulating member to the upper edge of a heater in the heating furnace body in 4.5 hours or longer. After this, the porous glass base material is vitrified by fusion by means of the heater.

According to the aspect of the invention, the porous glass base material is moved through the preheated region in 4.5 hours or longer as set forth above. In this way, by the time vitrification of the outer portion starts in the heated region provided by the heater, the porous glass base material, even the center portion, is sufficiently preheated. Which is to say, only a small difference in temperature is observed in the cross-section in the radial direction, and even distribution of temperature is achieved in the radial direction. This reduces unevenness in shrinkage resulting from vitrification. As a consequence, the porous glass base material is evenly vitrified by fusion without causing core displacement and cross-sectional shape deformation.

Here, it is assumed that the transit time through the preheated region is less than 4.5 hours. In this case, vitrification of the outer portion of the porous glass base material starts even though the center portion of the porous glass base material is not sufficiently preheated, that is to say, a large difference in temperature is observed in the cross-section in the radial direction, and the temperature distribution is uneven in the radial direction. As a consequence, the porous glass base material shrinks highly unevenly when vitrified by fusion, resulting in core displacement and cross-sectional shape deformation.

It may be the lowering rate at which the porous glass base material is lowered or the configuration of the insulating member which is adjusted to move the porous glass base material through the preheated region in 4.5 hours or longer. When the configuration of the insulating member is selected, the insulating member may be configured to cover the entire upper portion of the heating furnace body. In this case, productivity is not sacrificed to prevent core displacement and cross-sectional shape deformation which may result from vitrification of the porous glass base material by fusion.

As described above, the sintering method of a porous glass base material relating to the aspect of the present invention realizes a high-quality optical fiber preform with core displacement and cross-sectional shape deformation reduced. In addition, by drawing this preform, an optical fiber of a very low connection loss can be manufactured.

### [EXAMPLES]

### EXAMPLE 1

The following explains the sintering method relating to the aspect of the invention in more detail with reference to the attached drawings and examples.

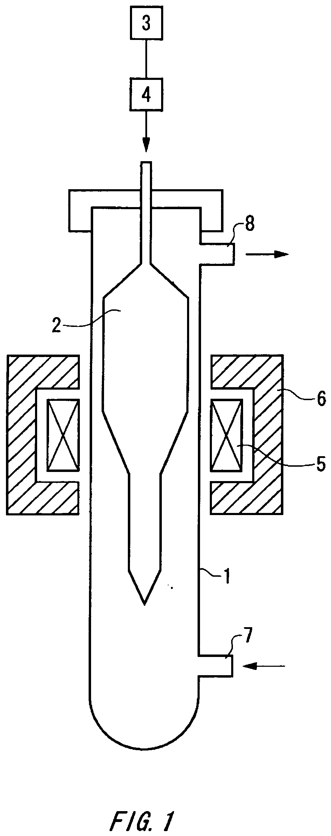

Fig. 1 shows an example of a sintering apparatus. A rod-like porous glass base material 2 is hung in a furnace core tube 1, by means of a holding and driving mechanism 4 coupled to a rate control apparatus 3. The rate control apparatus 3 controls the lowering rate. Furthermore, a heating furnace constituted by a heater 5 and an insulating member 6 is provided concentrically with respect to the central axis of the furnace core tube 1. A gas inlet pipe 7 is provided to supply a dehydration gas such as a chlorine gas and an inert gas such as a helium gas. The gas inlet pipe 7 is coupled to a gas source (not shown). The reference numeral 8 indicates an exhaust pipe.

The following describes how a porous glass base material is sintered.

The rod-like porous glass base material 2 may be formed by deposition of glass particles in accordance with the OVD method. A chlorine gas and a helium gas are supplied via the gas inlet pipe 7, mix with each other, and are guided into the furnace core tube 1. Thus, the furnace core tube 1 is filled with the chlorine gas and helium gas. The heater 5 heats up a heated region.

While the lowering rate of the porous glass base material 2 is controlled by the rate control apparatus 3, and the porous glass base material 2 is axis-rotated by the holding and driving mechanism 4, the porous glass base material 2 is slowly lowered and moved through the heated region provided by the heater. As a result of this process, the porous glass base material 2 is sintered for dehydration and vitrification into a transparent glass.

In accordance with the above-described sintering method, five porous glass base materials were respectively sintered under five different conditions.

The five porous glass base materials all had an outer diameter of250 mm and a mass of 80 kg, but were lowered during the sintering process at different rates of 1.68 mm/min, 1.58 mm/min, 1.48 mm/min, 1.28 mm/min, and 1.08 mm/min. The temperature of the heater 5 was set to 1,500 °C, which causes the porous glass base materials to be entirely fused but not to become longer.

The following explains how preforms obtained by the sintering process were evaluated in terms of core displacement and cross-sectional shape deformation.

The core displacement was indicated by a core displacement ratio calculated by dividing the amount of displacement between the axial center of the core and the central axis of the preform by the diameter of the preform. The cross-sectional shape deformation was indicated by a deformation ratio calculated by dividing a difference between the major and minor axes of the preform by the diameter of the preform. The core displacement and deformation ratios were measured for the effective part of the preform at intervals of 10 mm, and maximum core displacement and deformation ratios are shown. Here, A (mm) denotes the length of the preheated region extending from the upper edge of the insulating member to the upper edge of the heater in the heating furnace, and the transit time through the preheated region was calculated based on the length of the preheated region and the lowering rate.

Table 1 below shows the obtained results for the five porous glass base materials.

As clearly shown in Table 1, both the core displacement and deformation ratios were improved to 0.1 % or lower by setting the transit time through the preheated region at 4.5 hours or longer.

### [Table 1]

### EXAMPLE 2

Five porous glass base materials were sintered under the same conditions as in the example 1 except that the lowering rate is fixed to a constant level of 1.65 mm/min and the length of the insulating member in the heating furnace (corresponding to the preheated region) is set to different values including 400 mm, 420 mm, 450 mm, 500 mm and 600mm. Table 2 below shows the results of the example 2.

As clearly shown in Table 2, both the core displacement and deformation ratios were improved to 0.1 % or lower by setting the transit time through the preheated region at 4.5 hours or longer. Furthermore, the core displacement and deformation ratios were improved to 0.05 % or lower by setting the transit time through the preheated region at 6.0 hours.

### [Table 2]

### [INDUSTRIAL APPLICABILITY]

An aspect of the present invention realizes an optical fiber preform with very low core displacement and deformation ratios. In addition, by drawing such an optical fiber preform, an optical fiber having a low connection loss can be provided.

## Claims

1. A method of sintering a rod-like porous glass base material (2) to be vitrified into a transparent glass, the method comprising:
lowering the porous glass base material (2) into a heating furnace having a heater (5) heated to a sintering temperature and a preheated region extending from an upper edge of an insulating member (6) to an upper edge of the heater (5); and
controlling a lowering rate of the porous glass base material (2),
**characterized in that** the lowering rate is controlled so that it takes 4.5 hours or longer for every part of the porous glass base material (2) to move through the preheated region.

## Patentansprüche

1. Verfahren zum Sintern eines stabartigen porösen Glasbasismaterials (2), um in ein transparentes Glas verglast zu werden, welches Verfahren aufweist:
Absenken des porösen Glasbasismaterials (2) in einen Heizofen mit einer Heizvorrichtung (5), die auf eine Sintertemperatur aufgeheizt ist, und einem vorgeheizten Bereich, der sich von einer oberen Kante eines isolierenden Teils (6) zu einer oberen Kante der Heizvorrichtung (5) erstreckt; und
Steuern einer Absenkungsrate des porösen Glasbasismaterials (2),
**dadurch gekennzeichnet, dass** die Absenkungsrate so gesteuert wird, dass jeder Teil des porösen Glasbasismaterials (2) 4,5 Stunden oder länger benötigt, um sich durch den vorgeheizten Bereich zu bewegen.

## Revendications

1. Procédé de frittage d'un matériau de base de verre poreux (2) d'une forme similaire à une barre qui doit être vitrifié selon un verre transparent, le procédé comprenant:
le fait d'abaisser le matériau de base de verre poreux (2) à l'intérieur d'un four de chauffage qui comporte un moyen de chauffage (5) qui est chauffé jusqu'à une température de frittage et une région préchauffée qui s'étend depuis un bord supérieur d'un élément isolant (6) jusqu'à un bord supérieur du moyen de chauffage (5) ; et
le contrôle d'une vitesse d'abaissement du matériau de base de verre poreux (2), **caractérisé en ce que** la vitesse d'abaissement est contrôlée de telle sorte qu'il prend 4,5 heures ou plus que chaque partie du matériau de base de verre poreux (2) passe au travers de la région préchauffée.
